# EUROPEAN PATENT SPECIFICATION

(11) **EP 3 889 760 B1**
(45) Date of publication and mention of the grant of the patent: **10.09.2025**
(21) Application number: 21165934.7
(22) Date of filing: 30.03.2021
(51) Int. Cl.: G06F 3/12

(54) **VISUAL TIMELINE AND OPERATOR PROMPT TO IMPROVE DATA COLLECTION FOR PRODUCTION PRINT SYSTEM**
VISUELLE ZEITLINIE UND BEDIENERFÜHRUNG ZUR VERBESSERUNG DER DATENSAMMLUNG FÜR EIN PRODUKTIONSDRUCKSYSTEM
CHRONOLOGIE VISUELLE ET INVITE D'OPÉRATEUR POUR AMÉLIORER LA COLLECTE DE DONNÉES D'UN SYSTÈME D'IMPRESSION DE PRODUCTION

(30) Priority: 01.04.2020 US 202016837253; 01.04.2020 US 202016837271
(43) Date of publication of application: 06.10.2021
(73) Proprietor: Ricoh Company, Ltd., Tokyo 143-8555 (JP)
(72) Inventor: MAHANI, Maryamossadat Nematollahi, Boulder, CO Colorado 80301-9270 (US); IORDACHESCU, Vlad Alin, Boulder, CO Colorado 80301-9270 (US)
(74) Representative: SSM Sandmair

(56) References cited:
- US-A1- 2017 300 272
- US-A1- 2019 034 130

## Description

### Field

The disclosure relates to the field of printing, and in particular, to data collection for a production print system.

### Background

Production printers, which can print hundreds of pages per minute, are typically managed by a print operator that performs many tasks to make sure print jobs are printed correctly and efficiently. In addition to their other duties, print operators may be tasked with recording details about various states of a printer to help a print shop assess productivity. However, in an effort to finish their other primary tasks, print operators often write up logs of what happened at the end of the day, and the information may thus be prone to errors and approximations.

US 2019/0034130 A1 discloses a display apparatus for displaying events in a printer using rectangles indicating the different events.

### Summary

Embodiments described herein provide for visual timeline and operator prompt to improve data collection for a print system. A printer terminal device in communication with a plurality of printers is configured to display, for each printer, a visual timeline of printer events. The visual timeline is augmented to indicate whether each event is associated with complete information or instead has missing information. For example, the visual timeline may visually show the operator that the operator has not yet attached commentary to describe a cause of the printer idling for a period of time. The visual display of the status of data entry for individual events conveniently prompts the print operator to complete/update event data while it is fresh in their memory instead of using written logs at the end of the day, thereby improving accuracy in data collection for the print shop to help print operators identify and correct inefficiencies in printing operations. One embodiment is a system according to claim 1, that includes a printer terminal device in communication with a printer and configured to receive printer statuses of the printer over a period of time. Each printer status indicates one of a printing state, an idle state, and an error state. The printer terminal device is configured to present a Graphical User Interface (GUI) at a display that includes a visual timeline of the printer statuses of the printer over the period of time. The visual timeline includes a different visual representation for each of the printing state, the idle state, and the error state. The printer terminal device is further configured to determine that a printer status displayed on the visual timeline is associated with absent user input, and to modify the visual timeline to display a visual indicator for the printer status indicating the absent user input.

Another embodiment is a method according to claim 7. The method includes receiving printer statuses of a printer over a period of time, each printer status indicating one of a printing state, an idle state, and an error state. The method also includes presenting a Graphical User Interface (GUI) at a display that includes a visual timeline of the printer statuses of the printer over the period of time, the visual timeline including a different visual representation for each of the printing state, the idle state, and the error state. The method further includes determining that a printer status displayed on the visual timeline is associated with absent user input, and modifying the visual timeline to display a visual indicator for the printer status indicating the absent user input.

Other exemplary embodiments (e.g., methods and computer-readable media relating to the foregoing embodiments) may be described below.

### Description of the Drawings

Some embodiments of the present invention are now described, by way of example only, and with reference to the accompanying drawings. The same reference number represents the same element or the same type of element on all drawings.
FIG. 1 is a block diagram of a print system in an illustrative embodiment.
FIG. 2 shows a printer terminal device in an illustrative embodiment.
FIG. 3 shows a graphic window displaying the visual timeline in an illustrative embodiment.
FIG. 4 shows a graphic window displaying a prompt for user input in relation to the visual timeline in an illustrative embodiment.
FIG. 5 is a flowchart illustrating a method for collecting data for a printing system in an illustrative embodiment.
FIG. 6 is a flowchart illustrating a method for collecting data for a printing system in another illustrative embodiment.
FIG. 7 illustrates a processing system operable to execute a computer readable medium embodying programmed instructions to perform desired functions in an exemplary embodiment.
FIG. 8 shows a printer terminal device in an illustrative embodiment.
FIG. 9 shows a GUI displaying a prompt for user input in relation to a visual timeline in an illustrative embodiment.
FIG. 10 is a flowchart illustrating a method of prompting data collection for a printing system in an illustrative embodiment.

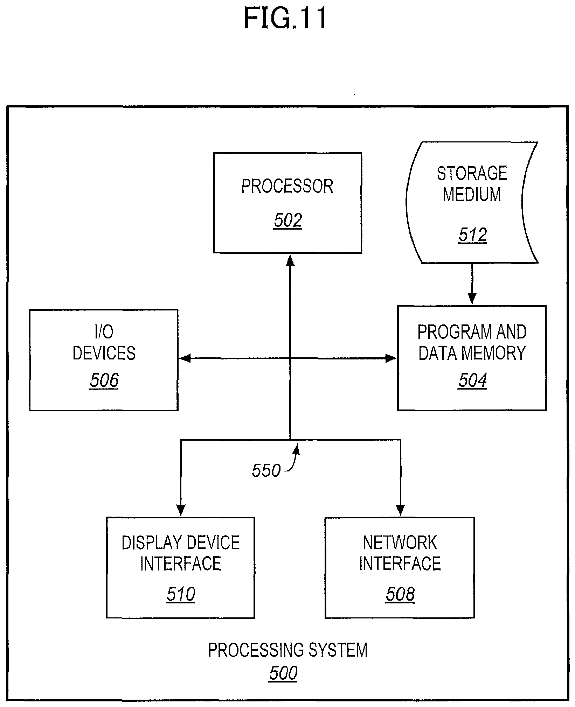

FIG. 11 illustrates a processing system operable to execute a computer readable medium embodying programmed instructions to perform desired functions in an exemplary embodiment.

### Detailed Description

### FIRST SETS OF EMBODIMENTS

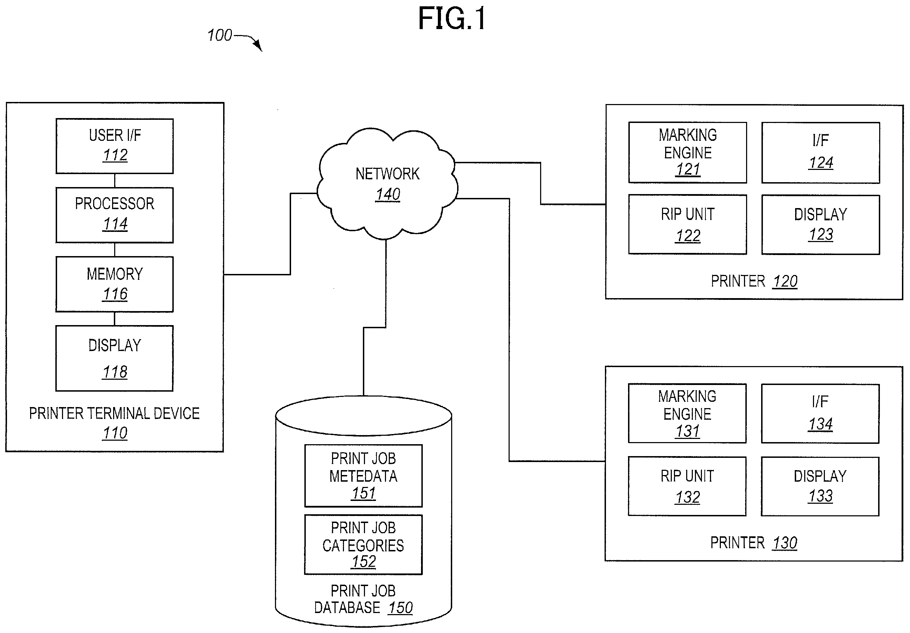

FIG. 1 is a block diagram of a print system 100 in an illustrative embodiment. The print system 100 comprises any systems, devices, or components operable to print incoming print jobs. The print system 100 may be managed and monitored by a user, or print operator, interacting with a printer terminal device 110 in communication with printers 120 and 130 via a network 140. Generally, the printer terminal device 110 includes a display 118 to present one or more Graphical User Interfaces (GUIs) to the user, and utilizes user interface (I/F) 112 to receive user input pertaining to presented GUIs. For example, in some embodiments, the printer terminal device 110 comprises a tablet or similar device in which the display 118 and user I/F 112 are integrated in the form of a touch screen that the user may directly interact with. Alternatively or additionally, the user I/F 112 may comprise a keyboard, mouse, etc. for interacting with controls presented on such GUIs.

The printer terminal device 110 is enhanced to improve the accuracy of printer event data reported by a print operator by displaying a visual timeline of each printer's status that indicates whether any particular status has incomplete information for the operator to complete. For example, the visual timeline may show a period of time that the printer was idling, and further illustrate whether the operator has attached metadata to the idle event that includes additional detail describing the idle period. The visual timeline seamlessly prompts the print operator to enter printer status metadata throughout the normal course of their print management duties instead of at the end of the day. This facilitates an increase in the amount of printer status data that is reported as well as an increase in accuracy of that data. Advantageously, print shops may use this improved data to help identify effective solutions for mitigating the expense of printer idling times.

Generally, the printer terminal device 110 manages user interactions to facilitate the handling of print jobs to be printed with the printers 120/130. The network 140 carries communications between the printer terminal device 110 and printers 120 and 130 based on user interactions with GUIs presented via display 118. The network 140 comprises any combination of devices and components for routing communications between the printer terminal device 110, print job database 150, and printers 120 and 130. For example, the network 140 may comprise the Internet, a local intranet, etc.

The printer terminal device 110 also communicates with a print job database 150 via the network 140. The print job database 150 stores data of previous print jobs that have been printed by the print system 100. In particular, the print job database 150 may store print job metadata 151, and the print job metadata 151 may be correlated with print job categories 152 to group previous print jobs by various combinations of shared characteristics. As will be described in greater detail below, the printer terminal device 110 is enhanced to improve accuracy of the print job metadata 151 reported by the print operator, and further to use the print job categories 152 to generate useful prompts to the print operator via the display 118.

The printers 120 and 130 physically mark print media based on received print jobs. While only two printers are illustrated, in further embodiments any suitable number of printers may be managed by the printer terminal device 110. In this embodiment, printer 120 includes I/F 124 for exchanging data via the network 140. In response to receiving print data from the network 140, the printer 120 may engage in rasterization of the print data via Rasterization Image Processing (RIP) unit 122, which may include multiple Rasterization Image Processors. The rasterized print data may then be used to direct the operations of a marking engine 121 (e.g., an inkjet marking engine, laser print engine, etc.) in order to mark physical media. The printer 120 may also include a display 123. In some embodiments, functions and/or GUIs described with respect to the display 118 of the printer terminal device 110 may alternatively or additionally be implemented with the display 123 of the printer 120. The printer 130 includes similar elements to those of printer 120, such as marking engine 131, RIP unit 132, display 133, and I/F 134.

In one embodiment, the printer terminal device includes a processor 114 and memory 116. The processor 114 is operable to perform the functions of the printer terminal device 110, and may be implemented as custom circuitry, as a hardware processor executing programmed instructions stored in memory 116, etc. Memory 116 may also store instructions for one or more GUIs to users of the printer terminal device 110. Memory 116 may be implemented as a solid-state memory, spinning disk, etc. in order to electronically store data.

The printer terminal device 110, print job database 150, and printers 120/130 may include an Ethernet interface, Wi-Fi interface, etc. for engaging in communications with network 140. Although the printer terminal device 110 and print job database 150 are shown and described as separate, remote components, it will be appreciated that, in some embodiments, the print system 100 may implement cloud functionality in which processing/storage functions of the printer terminal device 110 and print job database 150 may be at least partially implemented in the other, or implemented remotely via other component(s) or sever(s) connected to the network 140. The particular arrangement, number, and configuration of components described herein are examples for purposes of discussion and are non-limiting.

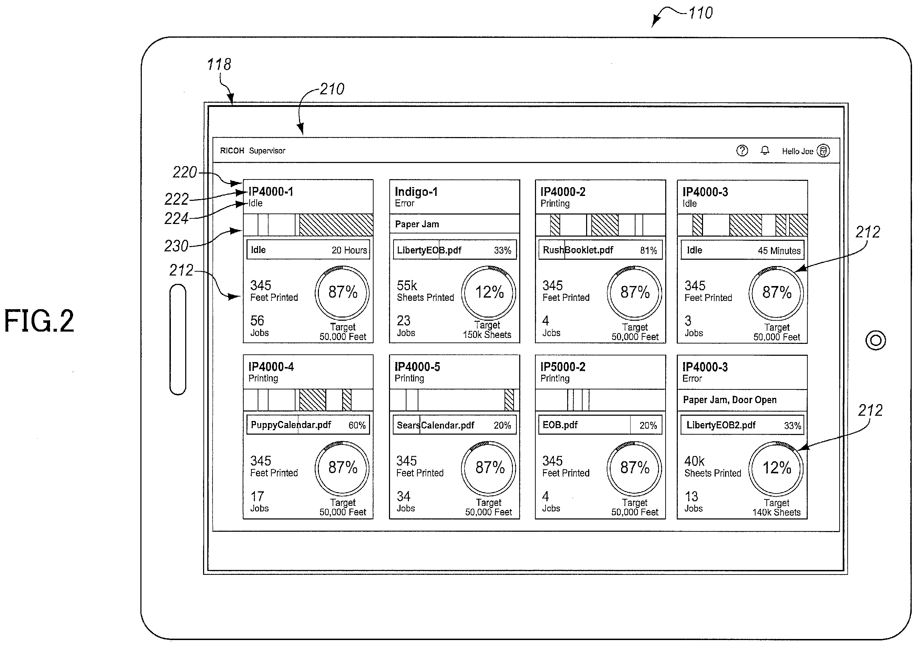

FIG. 2 shows a printer terminal device 110 in an illustrative embodiment. The printer terminal device 110 includes the display 118 to present one or more GUI(s) 210 displaying information of the print system 100. In particular, the GUI 210 includes a plurality of graphic windows 212 that each display data for a printer of the print system 100. Each graphic window 212 includes a printer status window 220 and a visual timeline 230. The printer status window 220 includes a printer identifier 222 that identifies the printer, and a current status indicator 224 indicating a current status of the printer. The visual timeline 230 displays a history of statuses of the printer.

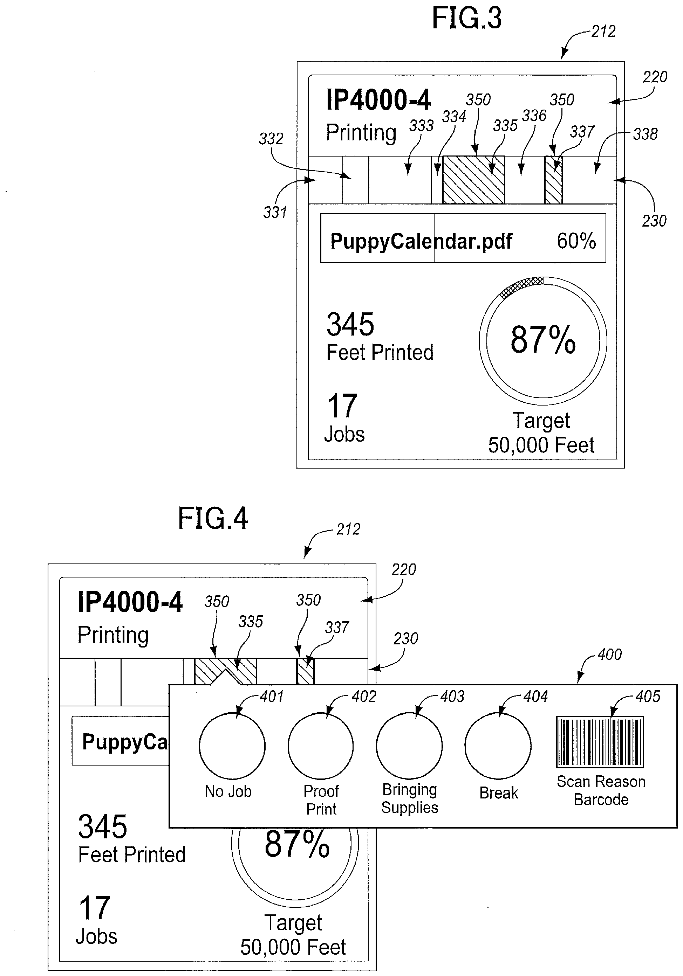

FIG. 3 shows a graphic window 212 displaying the visual timeline 230 in an illustrative embodiment. The visual timeline 230 includes a series of printer statuses 331-338 that adjoin along a single dimension to represent the status history of a printer over a period of time. A width of each printer status 331-338 within the visual timeline 230 and/or graphic window 212 may be proportional to an amount of time for which that printer status occurred.

The visual timeline 230 displays the printer statuses 331-338 in a manner that visually distinguishes changes to the type of printer status over time. For example, types of printer status may include printing states, idle states, and/or an error states. And, the visual timeline 230 may include a different visual representation for each of the printing state, the idle state, and the error state. For instance, in embodiments in which the different visual representation includes different colors, periods of normal printing may comprise green blocks/backgrounds, periods of idle times may comprise grey blocks/backgrounds, and periods of error states may comprise red blocks/backgrounds in the visual timeline 230. Similarly, the current status indicator 224 of the printer status window 220 may comprise a color indication of the printer's current status. For example, a background color of the printer status window 220 may be green to indicate printing, grey to indicate idle, and/or red to indicate error.

Additionally, the visual timeline 230 displays whether each printer status 331-338 is associated with complete or incomplete information. For example, printer statuses 331-338 having complete metadata may be displayed with a solid color/background, and printer statuses 331-338 having incomplete metadata may be displayed with a visual indicator 350. In this example, printer statuses 335 and 337 are associated with missing metadata, and the visual timeline 230 displays a visual indicator 350 indicating a prompt for user input.

As shown in the example of FIG. 3, the visual indicator 350 may comprise a visual overlay on the printer status in the visual timeline 230. As additionally shown in this example, the visual overlay may comprise hash marks. For instance, the visual indicator 350 of printer status 335 may comprise markings over a grey background to indicate missing metadata for an idling event, and the visual indicator 350 of printer status 337 may comprise markings over a red background to indicate missing metadata for an error event. However, it will be appreciated that the visual indicator 350 may additionally or alternatively include other visual symbols and graphics such as arrows, asterisks, blank fields, pop-up windows, etc.

In some embodiments, the visual indicator 350 includes a control element that is responsive to user selection. For example, areas of printer statuses 331-338 on the visual timeline 230 which include or are associated with the visual indicator 350 may be selectable via user touch or pointer device clicks. In response to user selection of the visual indicator 350, additional user input prompts may be generated and displayed as further described below.

FIG. 4 shows a graphic window 212 displaying a prompt 400 for user input in relation to the visual timeline 230 in an illustrative embodiment. Suppose, for this example, that the print operator has selected the visual indicator 350 of the printer status 335 having a grey background to indicate an idle period. In response, the printer terminal device 110 generates/displays the prompt 400 on the GUI 210. The prompt 400 includes a graphical window with potential reasons for the printer status as selectable options 401-405. For example, the operator may select the area of selectable option 403 to indicate that the idle period, or printer status 335, was due to fetching supplies for the printer. Using patterns of this type of information collected over time, a print shop may make informed decisions to improve print shop efficiency such as determining to relocate their supplies closer to the print area based on the number of user responses indicating fetching supplies as a factor for printer idling periods.

After the print operator has selected one of the selectable options 401-405, the prompt 400 is removed and the visual timeline 230 is be modified to remove display of the visual indicator 350. For example, the area of printer status 335 may turn solid grey to indicate that the period of idling is associated with complete metadata. The visual timeline 230 thus unobtrusively cues the print operator to fill in details for printer events at the print system 100 without interrupting their operator duties and interactions with the printer terminal device 110 and GUI 210 to manage the print system 100.

The selectable options 401-405 may alternatively or additionally include other control elements or actions to facilitate collecting operator data. For example, the selectable option 405 may trigger opening a camera application to capture an image of an error barcode printed by the printer in association with the printer status. The prompt 400 may additionally or alternatively include options to pop-up a window for typing input and/or to open a file explorer for browsing/attaching a file to the printer status. In response to receiving input that satisfies the metadata conditions for a particular printer event status, the visual timeline 230 removes display of the visual indicator 350. Further illustrative details of the printer terminal device 110, GUI 210, and visual timeline 230 are described below.

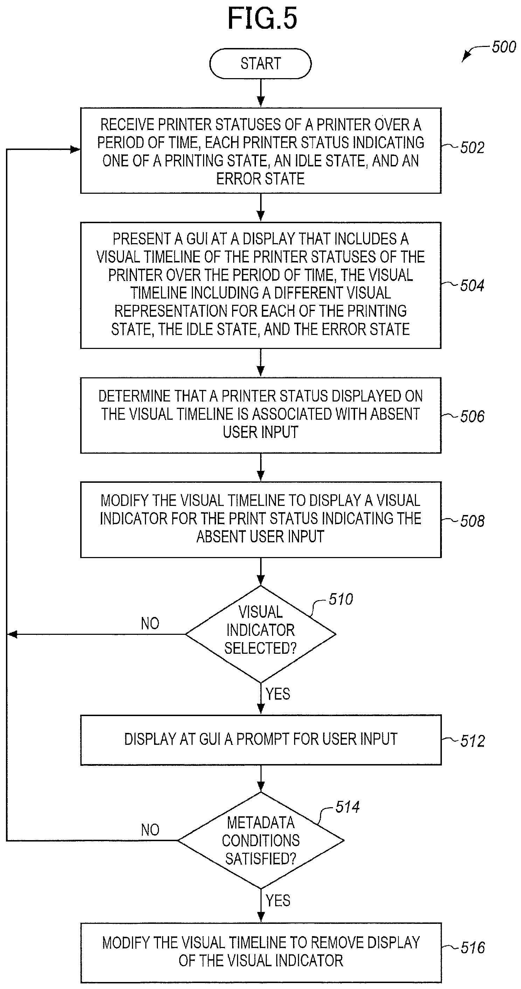

FIG. 5 is a flowchart illustrating a method for collecting data for a printing system in an illustrative embodiment. The steps of the method 500 are described with reference to the print system 100 of FIG. 1, but those skilled in the art will appreciate that the method 500 may be performed in other systems. The steps of the flowcharts described herein are not all inclusive, may include other steps not shown, and may be performed in an alternative order.

In step 502, the printer terminal device 110 receives printer statuses of the printer over a period of time, each printer status indicating one of a printing state, an idle state, and an error state. In step 504, the printer terminal device 110 presents the GUI 210 at the display 118 that includes a visual timeline 230 of the printer statuses 331-338 of the printer over the period of time, the visual timeline 230 including a different visual representation for each of the printing state, the idle state, and the error state.

In step 506, the printer terminal device 110 determines that a printer status (e.g., printer status 335) displayed on the visual timeline 230 is associated with absent user input. For example, the printer terminal device 110 may flag printer idle statuses as associated with absent user input if the idle period lasted longer than a predetermined number of minutes. As another example, the printer terminal device 110 may flag error statuses as associated with absent user input if the error belongs to a predetermined category of print errors. The printer terminal device 110 may determine the metadata conditions for a printer status based on various combinations of factors including, but not limited to, print job type (e.g., simplex/duplex, business cards, calendars, statements, etc.), print job size (e.g., length, file size, number of sheets, etc.), print job name, print job customer, printer type/identifier, and/or operator identifier.

In step 508, the printer terminal device 110 modifies the visual timeline 230 to display a visual indicator 350 for the printer status indicating the absent user input. In step 510, the printer terminal device 110 determines whether the visual indicator 350 has been selected. If not, the method 500 returns and repeats steps 502-510 as the visual timeline 230 continues to reflect updates to the printer status history over time. Otherwise, if the visual indicator 350 is selected, the method 500 proceeds to step 512 where the printer terminal device 110 displays at the GUI 210 a prompt (e.g., prompt 400) for user input.

In step 514, the printer terminal device 110 determines whether the metadata conditions for the printer status are satisfied by the user input. If not, the method 500 returns and repeats steps 502-510 as the visual timeline 230 continues to reflect updates to the printer status history over time. Otherwise, if the metadata conditions for the printer status are satisfied by the user input, the method 500 proceeds to step 516 where the printer terminal device 110 modifies the visual timeline 230 to remove display of the visual indicator 350. Thus, in using the method 500, the print operator is visually prompted to enter printer status metadata throughout the normal course of their print management duties instead of at the end of the day.

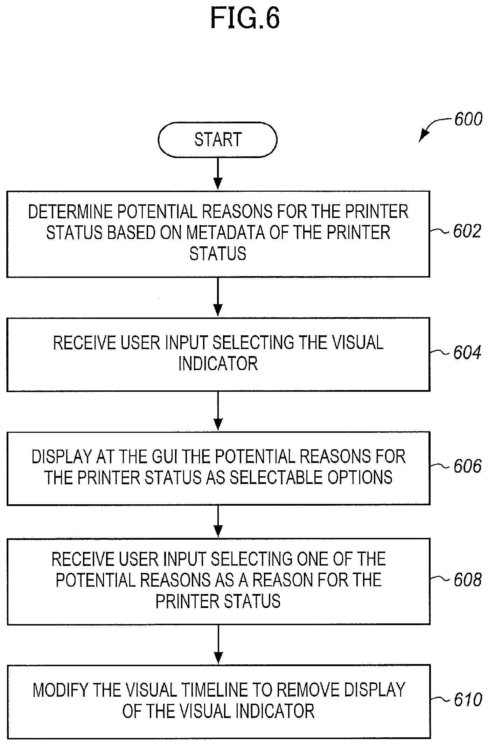

FIG. 6 is a flowchart illustrating a method 600 for collecting data for a printing system in another illustrative embodiment. The steps of the method 600 are described with reference to the print system 100 of FIG. 1, but those skilled in the art will appreciate that the method 600 may be performed in other systems. The steps of the flowcharts described herein are not all inclusive, may include other steps not shown, and may be performed in an alternative order.

In step 602, the printer terminal device 110 determines potential reasons for one or more printer statuses 331-338 based on metadata associated with each printer status. For example, the printer terminal device 110, being in communication with the printer, is configured to track/retrieve metadata of print jobs processing/printing with the printer. As idling/error events occur with a print job, the printer terminal device 110 may correlate attributes of the job with the event to determine potential reasons for the event. For example, the printer terminal device 110 may reference metadata of similar, previous print jobs (e.g., same type of print job, similar time of day, etc.) to determine and/or rank the potential reasons for the printer idling.

In step 604, the printer terminal device 110 receives user input selecting the visual indicator 350. In response thereto, in step 606, the printer terminal device 110 displays at the GUI 210 the potential reasons for the printer status as selectable options. The printer terminal device 110 thus automatically generates/displays reasons the print operator is most/more likely to use to explain the printer event, thereby obtaining accurate operator input while simplifying the operator's manual effort in entering the input.

The printer terminal device 110 may display the potential reasons according to their determined rank, indicating which reasons are most or more likely to occur given the circumstances surrounding the printer event. The printer terminal device 110 may display potential reasons in order of rank (e.g., most likely potential reason at topmost and/or leftmost position of prompt/window). Alternatively or additionally, potential reasons with higher ranks may be displayed in a highlighted or visually prominent manner for convenience to the print operator.

In step 608, the printer terminal device 110 receives user input selecting one of the potential reasons as a reason for the printer status. In response thereto, in step 610, the printer terminal device 110 modifies the visual timeline 230 to remove display of the visual indicator 350. The method 600 thus improves data accuracy of printer events by seamlessly displaying visual cues that encourage the print operator to tag specific events with additional data that may be collected over time to improve print operations.

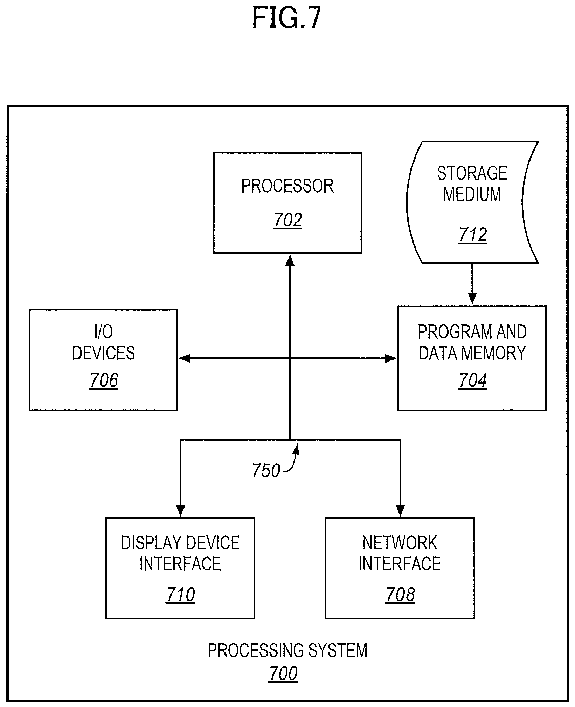

Embodiments disclosed herein can take the form of software, hardware, firmware, or various combinations thereof. In one particular embodiment, software is used to direct a processing system of printing system 100 to perform the various operations disclosed herein. FIG. 7 illustrates a processing system 700 operable to execute a computer readable medium embodying programmed instructions to perform desired functions in an exemplary embodiment. Processing system 700 is operable to perform the above operations by executing programmed instructions tangibly embodied on computer readable storage medium 712. In this regard, embodiments of the invention can take the form of a computer program accessible via computer-readable medium 712 providing program code for use by a computer or any other instruction execution system. For the purposes of this description, computer readable storage medium 712 can be anything that can contain or store the program for use by the computer.

Computer readable storage medium 712 can be an electronic, magnetic, optical, electromagnetic, infrared, or semiconductor device. Examples of computer readable storage medium 712 include a solid state memory, a magnetic tape, a removable computer diskette, a random access memory (RAM), a read-only memory (ROM), a rigid magnetic disk, and an optical disk. Current examples of optical disks include compact disk - read only memory (CD-ROM), compact disk - read/write (CD-R/W), and DVD.

Processing system 700, being suitable for storing and/or executing the program code, includes at least one processor 702 coupled to program and data memory 704 through a system bus 750. Program and data memory 704 can include local memory employed during actual execution of the program code, bulk storage, and cache memories that provide temporary storage of at least some program code and/or data in order to reduce the number of times the code and/or data are retrieved from bulk storage during execution.

Input/output or I/O devices 706 (including but not limited to keyboards, displays, pointing devices, etc.) can be coupled either directly or through intervening I/O controllers. Network adapter interfaces 708 may also be integrated with the system to enable processing system 700 to become coupled to other data processing systems or storage devices through intervening private or public networks. Modems, cable modems, IBM Channel attachments, SCSI, Fibre Channel, and Ethernet cards are just a few of the currently available types of network or host interface adapters. Display device interface 710 may be integrated with the system to interface to one or more display devices, such as printing systems and screens for presentation of data generated by processor 702.

### SECOND SETS OF EMBODIMENTS

FIG. 1 is a block diagram of a print system 100 in an illustrative embodiment. The print system 100 comprises any systems, devices, or components operable to print incoming print jobs. The print system 100 may be managed and monitored by a user, or print operator, interacting with a printer terminal device 110 in communication with printers 120 and 130 via a network 140. Generally, the printer terminal device 110 includes a display 118 to present one or more Graphical User Interfaces (GUIs) to the user, and utilizes user interface (I/F) 112 to receive user input pertaining to presented GUIs. For example, in some embodiments, the printer terminal device 110 comprises a tablet or similar device in which the display 118 and user I/F 112 are integrated in the form of a touch screen that the user may directly interact with. Alternatively or additionally, the user I/F 112 may comprise a keyboard, mouse, etc. for interacting with controls presented on such GUIs.

The printer terminal device 110 is enhanced to improve the accuracy of printer event data reported by a print operator by displaying multiple visual timelines of the multiple printers of the print system 100. The display of visual timelines is further enhanced with the display of a marker or line that connects the visual timelines with respect to time. The location of the marker directs the display of additional contextual information for the print operator to remember details to add that can improve the accuracy of collected data for the print system 100. Advantageously, print shops may use this improved data to help identify effective solutions for mitigating the expense of printer idling times.

Generally, the printer terminal device 110 manages user interactions to facilitate the handling of print jobs to be printed with the printers 120/130. The network 140 carries communications between the printer terminal device 110 and printers 120 and 130 based on user interactions with GUIs presented via display 118. The network 140 comprises any combination of devices and components for routing communications between the printer terminal device 110, print job database 150, and printers 120 and 130. For example, the network 140 may comprise the Internet, a local intranet, etc.

The printer terminal device 110 also communicates with a print job database 150 via the network 140. The print job database 150 stores data of previous print jobs that have been printed by the print system 100. In particular, the print job database 150 may store print job metadata 151, and the print job metadata 151 may be correlated with event data 152 to retrieve contextual cues for the print operator. As will be described in greater detail below, the printer terminal device 110 is enhanced to improve accuracy of the print job metadata 151 reported by the print operator, and further to use the event data 152 to generate useful prompts to the print operator via the display 118.

The printers 120 and 130 physically mark print media based on received print jobs. While only two printers are illustrated, in further embodiments any suitable number of printers may be managed by the printer terminal device 110. In this embodiment, printer 120 includes I/F 124 for exchanging data via the network 140. In response to receiving print data from the network 140, the printer 120 may engage in rasterization of the print data via Rasterization Image Processing (RIP) unit 122, which may include multiple Rasterization Image Processors. The rasterized print data may then be used to direct the operations of a marking engine 121 (e.g., an inkjet marking engine, laser print engine, etc.) in order to mark physical media. The printer 120 may also include a display 123. In some embodiments, functions and/or GUIs described with respect to the display 118 of the printer terminal device 110 may alternatively or additionally be implemented with the display 123 of the printer 120. The printer 130 includes similar elements to those of printer 120, such as marking engine 131, RIP unit 132, display 133, and I/F 134.

In one embodiment, the printer terminal device includes a processor 114 and memory 116. The processor 114 is operable to perform the functions of the printer terminal device 110, and may be implemented as custom circuitry, as a hardware processor executing programmed instructions stored in memory 116, etc. Memory 116 may also store instructions for one or more GUIs to users of the printer terminal device 110. Memory 116 may be implemented as a solid-state memory, spinning disk, etc. in order to electronically store data.

The printer terminal device 110, print job database 150, and printers 120/130 may include an Ethernet interface, Wi-Fi interface, etc. for engaging in communications with network 140. Although the printer terminal device 110 and print job database 150 are shown and described as separate, remote components, it will be appreciated that, in some embodiments, the print system 100 may implement cloud functionality in which processing/storage functions of the printer terminal device 110 and print job database 150 may be at least partially implemented in the other, or implemented remotely via other component(s) or sever(s) connected to the network 140. The particular arrangement, number, and configuration of components described herein are examples for purposes of discussion and are non-limiting.

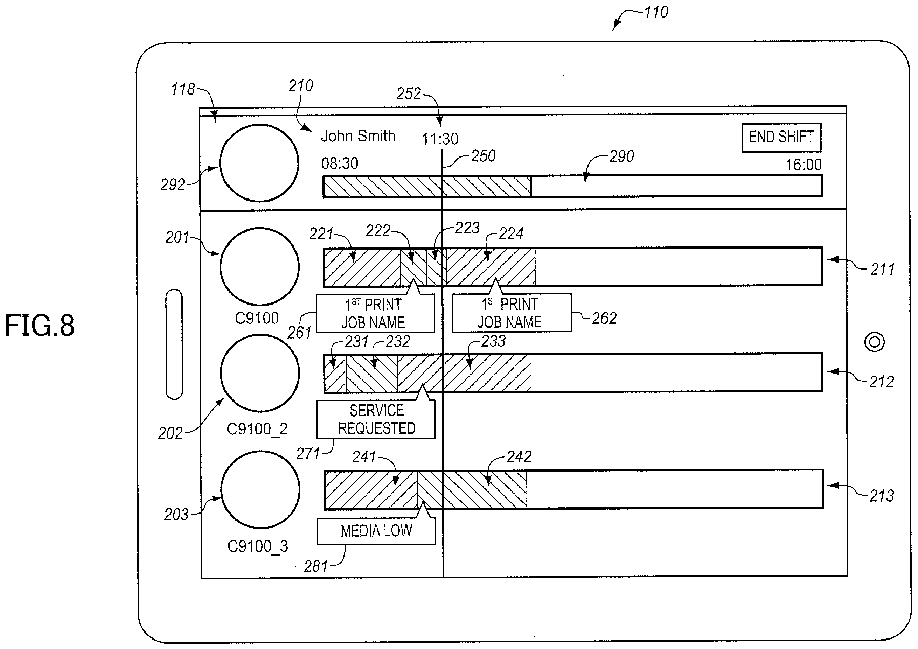

FIG. 8 shows a printer terminal device 110 in an illustrative embodiment. The printer terminal device 110 includes the display 118 to present one or more GUI(s) 210 displaying information of the print system 100. In particular, the GUI 210 includes visual timelines 211-213 for each of a plurality of printers of the print system 100. The visual timelines 211-213 are generally displayed as separate timelines that are aligned with respect to time. Each visual timeline 211-213 includes a series of printer statuses that adjoin along a single dimension to represent the status history of a printer over a period of time. For example, each visual timeline 211-213 may extend horizontally, with an adjacent visual timeline displayed above and/or below to align with respect to a horizontal dimension of time.

In this example, a first visual timeline 211 includes printer statuses 221-224 for a first printer 201, a second visual timeline 212 includes printer statuses 231-233 of a second printer 202, and a third visual timeline 213 includes printer statuses 241-242 for a third printer 203. Each visual timeline 211-213 displays the printer statuses in a manner that visually distinguishes changes to the type of printer status over time. For example, types of printer status may include printing states, idle states, and/or an error states. And, the visual timelines 211-213 may include a different visual representation for each of the printing state, the idle state, and the error state. For instance, in embodiments in which the different visual representation includes different colors, periods of normal printing may comprise green blocks/backgrounds, periods of idle times may comprise grey blocks/backgrounds, and periods of error states may comprise red blocks/backgrounds in the visual timeline.

Additionally, the visual timelines 211-213 may include control elements responsive to user interaction/selection. For example, areas of printer statuses on each visual timeline which may be selectable via user touch or pointer device clicks. In response to user selection of a printer status, the printer terminal device 110 may generate additional user prompts and/or contextual information for entering additional information regarding printer statuses as further described below.

Suppose, for this example, that a print operator managing printers 201-203 via the printer terminal device 110 is interacting with the GUI 210 to enter additional data regarding an idle period (i.e., periods in which a printer is not printing despite being capable of printing or not having errors that prevent printing). Thus, the operator may select/touch an area of printer status 223 which, in this example, corresponds with an idle period of the first printer 201. In response, the printer terminal device 110 generates/displays a line 250 that extends across (e.g., in a vertical direction perpendicular to a horizontal dimension of time) one or more of the visual timelines 211-213. The line 250 may be displayed at a location of the user interaction and indicate a historical point of time 252 that corresponds with the location. In this example, the horizontal position of the line 250 indicates a time of 11:30.

Additionally, the printer terminal device 110 may retrieve event data of one or more print jobs based on the historical point of time 252. For example, the printer terminal device 110 may retrieve, from the print job database 150, event data 152 that occurred for each printer during a window of time near 11:30. This retrieved contextual information may be displayed alongside the line 250 to help the print operator recognize or remember what happened with respect to the printer status 223, thus making print shop data collection more accurate and reliable.

For example, with respect to the first printer 201, the printer terminal device 110 may display a first print job name 261 of a print job that printed before the historical point of time 252 (e.g., visually correlated with a prior printer status 222 that is green to indicate a period of printing). It may further display a second print job name 262 of another print job that printed after the historical point of time 252 (e.g., visually correlated with a prior printer status 224 that is green to indicate a period of printing). The first print job name 261 may be displayed to one side of the line 250, and the second print job name 262 may be displayed to another side of the line 250. Thus, the displayed event data may include metadata or other information of print jobs associated with printer status(es) adjacent to the printer status selected by the user.

Alternatively or additionally, the printer terminal device 110 may retrieve event data of other printers that may help provide context for the print operator. For example, with respect to the second printer 202, the printer terminal device 110 may retrieve/display an error description 271 of printer status 233 that coincided with the selected idle printer status 223 of the first printer 201. As another example, with respect to the third printer 203, the printer terminal device 110 may retrieve/display a warning message 281 received at the third printer 203 that occurred within a threshold period of time of the line 250.

The printer terminal device 110 may also receive an operator schedule for a print operator managing the printers, and display at the GUI 210 an operator timeline 290 aligned with the visual timelines 211-213 with respect to time. The line 250 may extend to/across the operator timeline 290 to help an operator 292 visualize their activity throughout the day with respect to time and remember the details of print statuses to record for improved data collection accuracy.

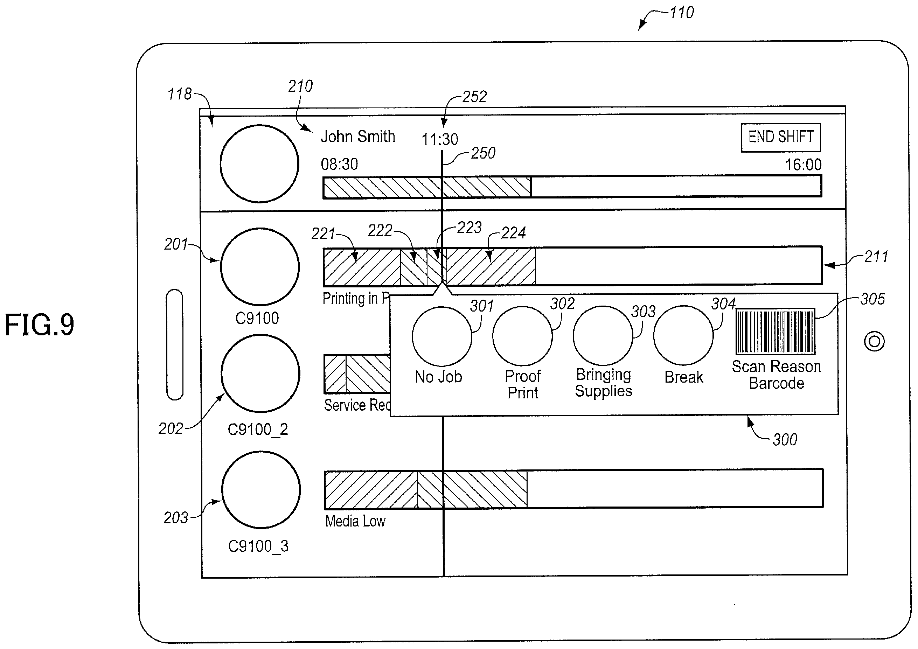

FIG. 9 shows the GUI 210 displaying a prompt 300 for user input in relation to the visual timeline 211 in an illustrative embodiment. In continuing with the previous example, suppose that the print operator has selected the printer status 223 having a grey background to indicate an idle period. In addition to the line 250, the printer terminal device 110 may display the prompt 300 on the GUI 210. The prompt 300 may include a graphical window with potential reasons for the printer status as selectable options 301-305. For example, the operator may select the area of selectable option 303 to indicate that the idle period, or printer status 223, was due to fetching supplies for the printer. Using patterns of this type of information collected over time, a print shop may make informed decisions to improve print shop efficiency such as determining to relocate their supplies closer to the print area based on the number of user responses indicating fetching supplies as a factor for printer idling periods.

After the print operator has selected one of the selectable options 301-305, the prompt 300, line 250, and/or contextual information may be removed from display at the GUI 210. The selectable options 301-305 may alternatively or additionally include other control elements or actions to facilitate collecting operator data. For example, the selectable option 305 may trigger opening a camera application to capture an image of an error barcode printed by the printer in association with the printer status. The prompt 300 may additionally or alternatively include options to pop-up a window for typing input and/or to open a file explorer for browsing/attaching a file to the printer status. Further illustrative details of the printer terminal device 110, GUI 210, and visual timelines 211-213 are described below.

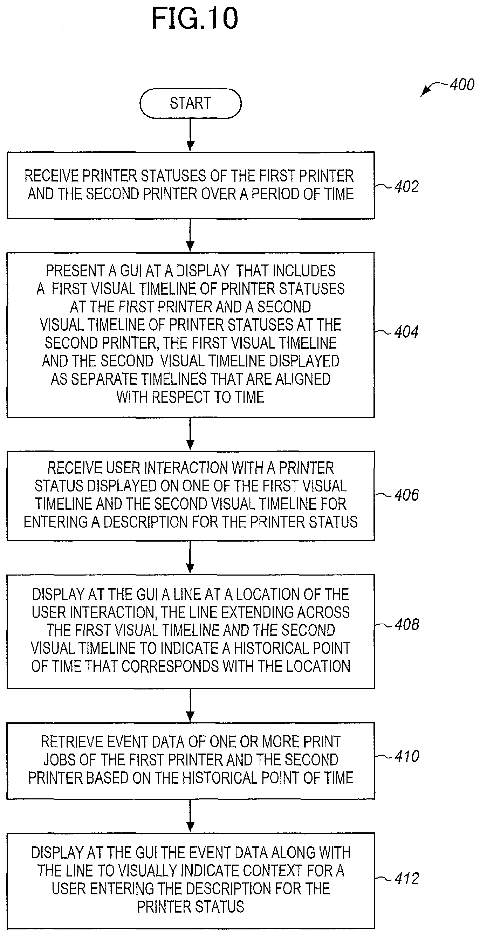

FIG. 10 is a flowchart illustrating a method 400 of prompting data collection for a printing system in an illustrative embodiment. The steps of the method 400 are described with reference to the print system 100, the printer terminal device 110, and GUI 210 described above, but those skilled in the art will appreciate that the method 400 may be performed in other systems. The steps of the flowcharts described herein are not all inclusive, may include other steps not shown, and may be performed in an alternative order.

In step 402, the printer terminal device 110 receives printer statuses of at a first printer and a second printer over a period of time. In step 404, the printer terminal device 110 presents the GUI 210 at the display 118 that includes a first visual timeline of printer statuses at the first printer and a second visual timeline of printer statuses at the second printer. As earlier described, the first visual timeline and the second visual timeline may be displayed as separate timelines that are aligned with respect to time.

In step 406, the printer terminal device 110 receives user interaction with a printer status displayed on one of the first visual timeline and the second visual timeline for entering a description for the printer status. In step 408, the printer terminal device 110 displays at the GUI 210 a line at a location of the user interaction, the line extending across the first visual timeline and the second visual timeline to indicate a historical point of time that corresponds with the location.

In step 410, the printer terminal device 110 retrieves event data of one or more print jobs of the first printer and the second printer based on the historical point of time. And, in step 412, the printer terminal device 110 displays at the GUI 210 the event data along with the line to visually indicate context for a user entering the description for the printer status. Thus, in using the method 400, the print operator is visually prompted to enter printer status metadata for improved print shop data collection.

Embodiments disclosed herein can take the form of software, hardware, firmware, or various combinations thereof. In one particular embodiment, software is used to direct a processing system of printing system 100 to perform the various operations disclosed herein. FIG. 7 illustrates a processing system 700 operable to execute a computer readable medium embodying programmed instructions to perform desired functions in an exemplary embodiment. Processing system 700 is operable to perform the above operations by executing programmed instructions tangibly embodied on computer readable storage medium 712. In this regard, embodiments of the invention can take the form of a computer program accessible via computer-readable medium 712 providing program code for use by a computer or any other instruction execution system. For the purposes of this description, computer readable storage medium 712 can be anything that can contain or store the program for use by the computer.

Computer readable storage medium 712 can be an electronic, magnetic, optical, electromagnetic, infrared, or semiconductor device. Examples of computer readable storage medium 712 include a solid state memory, a magnetic tape, a removable computer diskette, a random access memory (RAM), a read-only memory (ROM), a rigid magnetic disk, and an optical disk. Current examples of optical disks include compact disk - read only memory (CD-ROM), compact disk - read/write (CD-R/W), and DVD.

Processing system 700, being suitable for storing and/or executing the program code, includes at least one processor 702 coupled to program and data memory 704 through a system bus 750. Program and data memory 704 can include local memory employed during actual execution of the program code, bulk storage, and cache memories that provide temporary
storage of at least some program code and/or data in order to reduce the number of times the code and/or data are retrieved from bulk storage during execution.

Input/output or I/O devices 706 (including but not limited to keyboards, displays, pointing devices, etc.) can be coupled either directly or through intervening I/O controllers. Network adapter interfaces 708 may also be integrated with the system to enable processing system 700 to become coupled to other data processing systems or storage devices through intervening private or public networks. Modems, cable modems, IBM Channel attachments, SCSI, Fibre Channel, and Ethernet cards are just a few of the currently available types of network or host interface adapters. Display device interface 710 may be integrated with the system to interface to one or more display devices, such as printing systems and screens for presentation of data generated by processor 702.

## Claims

1. A system (100), comprising:
a printer terminal device (110) in communication with a printer (120, 130) and configured to receive printer statuses (331-338) of the printer over a period of time, each printer status indicating one of a printing state, an idle state, and an error state,
the printer terminal device configured to present a Graphical User Interface, GUI, (210) at a display (118) that includes a visual timeline (230) of the printer statuses of the printer over the period of time, the visual timeline including a different visual representation for each of the printing state, the idle state, and the error state, and
the printer terminal device configured to determine that a printer status displayed on the visual timeline is associated with absent user input, and to modify the visual timeline to display a visual indicator (350) for the printer status indicating the absent user input,
**characterized in that**
the printer terminal device is further configured to:
determine potential reasons for the printer status based on metadata of the printer status;
in response to receiving user input selecting the visual indicator, display at the GUI the potential reasons for the printer status as selectable options; and
in response to receiving user input selecting one of the potential reasons as a reason for the printer status, modify the visual timeline to remove display of the visual indicator.

2. The system of claim 1, wherein the printer terminal device is further configured to:
in response to receiving user input selecting the visual indicator, display at the GUI a prompt to enter user text for the printer status; and
in response to receiving the user text for the printer status, modify the visual timeline to remove display of the visual indicator.

3. The system of claim 1, wherein the printer terminal device is further configured to:
in response to receiving user input selecting the visual indicator, display at the GUI a prompt to capture an image of an error barcode printed by the printer in association with the printer status; and
in response to receiving the image of the error barcode printed by the printer in association with the printer status, modify the visual timeline to remove display of the visual indicator.

4. The system of claim 1, wherein:
the visual indicator comprises a visual overlay on the printer status in the visual timeline.

5. The system of claim 4, wherein:
the visual overlay comprises hash marks.

6. The system of claim 1, wherein:
the different visual representation for each of the printing state, the idle state, and the error state includes a different color.

7. A computer-implemented method, comprising:
receiving printer statuses of a printer over a period of time, each printer status indicating one of a printing state, an idle state, and an error state;
presenting a Graphical User Interface, GUI, at a display that includes a visual timeline of the printer statuses of the printer over the period of time, the visual timeline including a different visual representation for each of the printing state, the idle state, and the error state;
determining that a printer status displayed on the visual timeline is associated with absent user input; and
modifying the visual timeline to display a visual indicator for the printer status indicating the absent user input,
**characterized by**
determining potential reasons for the printer status based on metadata of the printer status;
in response to receiving user input selecting the visual indicator, displaying at the GUI the potential reasons for the printer status as selectable options; and
in response to receiving user input selecting one of the potential reasons as a reason for the printer status, modifying the visual timeline to remove display of the visual indicator.

8. The method of claim 7, further comprising:
in response to receiving user input selecting the visual indicator, displaying at the GUI a prompt to enter user text for the printer status; and
in response to receiving the user text for the printer status, modifying the visual timeline to remove display of the visual indicator.

9. The method of claim 7, wherein:
the visual indicator comprises a visual overlay on the printer status in the visual timeline.

10. The method of claim 9, wherein:
the visual overlay comprises hash marks.

11. The method of claim 7, wherein:
the different visual representation for each of the printing state, the idle state, and the error state includes a different color.

## Patentansprüche

1. System (100), umfassend:
ein Druckerendgerät (110), das mit einem Drucker (120, 130) in Verbindung steht und so konfiguriert ist, dass es über einen Zeitraum Druckerstatusmeldungen (331-338) des Druckers empfängt, wobei jede Druckerstatusmeldung einen Druckzustand, einen Leerlaufzustand oder einen Fehlerzustand angibt,
wobei die Druckerendgerät konfiguriert ist, um eine grafische Benutzeroberfläche (GUI) (210) auf einer Anzeige (118) darzustellen, die eine visuelle Zeitachse (230) der Druckerstatus des Druckers über den Zeitraum umfasst, wobei die visuelle Zeitachse eine unterschiedliche visuelle Darstellung für jeden der Druckzustände, den Leerlaufzustand und den Fehlerzustand umfasst, und
wobei das Druckerendgerät so konfiguriert ist, dass es feststellt, dass ein auf der visuellen Zeitachse angezeigter Druckerstatus mit einer fehlenden Benutzereingabe verbunden ist, und die visuelle Zeitachse so modifiziert, dass eine visuelle Anzeige (350) für den Druckerstatus angezeigt wird, die die fehlende Benutzereingabe anzeigt,
**dadurch gekennzeichnet, dass**
das Druckerendgerät ferner so konfiguriert ist, dass es
mögliche Gründe für den Druckerstatus auf der Grundlage von Metadaten des Druckerstatus ermittelt;
als Reaktion auf den Empfang einer Benutzereingabe, die die visuelle Anzeige auswählt, die möglichen Gründe für den Druckerstatus als auswählbare Optionen auf der GUI anzeigt; und
als Reaktion auf den Empfang einer Benutzereingabe, die einen der möglichen Gründe als Grund für den Druckerstatus auswählt, die visuelle Zeitleiste so ändert, dass die Anzeige der visuellen Anzeige entfernt wird.

2. System nach Anspruch 1, wobei das Druckerendgerät ferner so konfiguriert ist, dass es
als Reaktion auf den Empfang einer Benutzereingabe, die die visuelle Anzeige auswählt, in der GUI eine Aufforderung zur Eingabe von Benutzerttext für den Druckerstatus anzeigt; und
als Reaktion auf den Empfang des Benutzertxt für den Druckerstatus die visuelle Zeitleiste so ändert, dass die Anzeige der visuellen Anzeige entfernt wird.

3. System nach Anspruch 1, wobei das Druckerendgerät ferner so konfiguriert ist, dass es
als Reaktion auf den Empfang einer Benutzereingabe, die den visuellen Indikator auswählt, auf der GUI eine Aufforderung zum Erfassen eines Bildes eines vom Drucker in Verbindung mit dem Druckerstatus gedruckten Fehler-Barcodes anzeigt; und
als Reaktion auf den Empfang des Bildes des vom Drucker in Verbindung mit dem Druckerstatus gedruckten Fehler-Barcodes die visuelle Zeitleiste so ändert, dass die Anzeige der visuellen Anzeige entfernt wird.

4. System nach Anspruch 1, wobei:
die visuelle Anzeige eine visuelle Überlagerung auf dem Druckerstatus in der visuellen Zeitleiste umfasst.

5. System nach Anspruch 4, wobei
die visuelle Überlagerung Hash-Markierungen umfasst.

6. System nach Anspruch 1, wobei
die unterschiedlichen visuellen Darstellungen für den Druckstatus, den Leerlaufstatus und den Fehlerstatus jeweils eine unterschiedliche Farbe aufweisen.

7. Computerimplementiertes Verfahren, umfassend:
Empfangen von Druckerstatusmeldungen eines Druckers über einen Zeitraum, wobei jede Druckerstatusmeldung einen Druckzustand, einen Leerlaufzustand oder einen Fehlerzustand angibt;
Darstellen einer grafischen Benutzeroberfläche (GUI) auf einer Anzeige, die eine visuelle Zeitleiste der Druckerstatus des Druckers über den Zeitraum umfasst, wobei die visuelle Zeitleiste eine unterschiedliche visuelle Darstellung für jeden der Druckzustände, den Leerlaufzustand und den Fehlerzustand umfasst;
Feststellen, dass ein auf der visuellen Zeitachse angezeigter Druckerstatus mit einer fehlenden Benutzereingabe verbunden ist; und
Modifizieren der visuellen Zeitachse, um einen visuellen Indikator für den Druckerstatus anzuzeigen, der die fehlende Benutzereingabe anzeigt,
**gekennzeichnet durch**
Bestimmen möglicher Gründe für den Druckerstatus auf der Grundlage von Metadaten des Druckerstatus;
als Reaktion auf den Empfang einer Benutzereingabe, die die visuelle Anzeige auswählt, Anzeigen der möglichen Gründe für den Druckerstatus als auswählbare Optionen in der GUI; und
als Reaktion auf den Empfang einer Benutzereingabe, Auswählen eines der möglichen Gründe als Grund für den Druckerstatus, Ändern der visuellen Zeitleiste, um die Anzeige der visuellen Anzeige zu entfernen.

8. Verfahren nach Anspruch 7, ferner umfassend:
als Reaktion auf den Empfang einer Benutzereingabe, die den visuellen Indikator auswählt, Anzeigen einer Aufforderung zur Eingabe von Benutzertxt für den Druckerstatus auf der GUI; und
als Reaktion auf den Empfang des Benutzertxt für den Druckerstatus, Ändern der visuellen Zeitleiste, um die Anzeige der visuellen Anzeige zu entfernen.

9. Verfahren nach Anspruch 7, wobei:
die visuelle Anzeige eine visuelle Überlagerung des Druckerstatus in der visuellen Zeitleiste umfasst.

10. Verfahren nach Anspruch 9, wobei
die visuelle Überlagerung Hash-Markierungen umfasst.

11. Verfahren nach Anspruch 7, wobei
die unterschiedliche visuelle Darstellung für jeden der Druckzustände, den Leerlaufzustand und den Fehlerzustand eine unterschiedliche Farbe umfasst.

## Revendications

1. Système (100), comprenant :
un dispositif terminal d'imprimante (110) en communication avec une imprimante (120, 130) et configuré pour recevoir des statuts d'imprimante (331-338) de l'imprimante au cours d'un laps de temps, chaque statut d'imprimante indiquant un parmi un état d'impression, un état inactif, et un état d'erreur,
le dispositif terminal d'imprimante étant configuré pour présenter une interface utilisateur graphique, « Graphical User Interface » GUI, (210), sur un écran d'affichage (118), qui inclut une ligne chronologique visuelle (230) des statuts d'imprimante de l'imprimante au cours du laps de temps, la ligne chronologique visuelle incluant une représentation visuelle différente pour chacun parmi l'état d'impression, l'état inactif, et l'état d'erreur, et
le dispositif terminal d'imprimante étant configuré pour déterminer qu'un statut d'imprimante affiché sur la ligne chronologique visuelle est associé à une entrée utilisateur absent, et pour modifier la ligne chronologique visuelle pour afficher un indicateur visuel (350) pour le statut d'imprimante indiquant l'entrée utilisateur absent,
**caractérisé en ce que**
le dispositif terminal d'imprimante est en outre configuré pour :
déterminer des raisons potentielles pour le statut d'imprimante sur la base de métadonnées du statut d'imprimante ;
en réponse à la réception d'une entrée utilisateur sélectionnant l'indicateur visuel, afficher, sur la GUI, les raisons potentielles pour le statut d'imprimante en tant qu'options sélectionnables ; et
en réponse à la réception d'une entrée utilisateur sélectionnant une parmi les raisons potentielles en tant que raison pour le statut d'imprimante, modifier la ligne chronologique visuelle pour éliminer l'affichage de l'indicateur visuel.

2. Système de la revendication 1, dans lequel le dispositif terminal d'imprimante est en outre configuré pour :
en réponse à la réception d'une entrée utilisateur sélectionnant l'indicateur visuel, afficher, sur la GUI, une invite à entrer un texte utilisateur pour le statut d'imprimante ; et
en réponse à la réception du texte utilisateur pour le statut d'imprimante, modifier la ligne chronologique visuelle pour éliminer l'affichage de l'indicateur visuel.

3. Système de la revendication 1, dans lequel le dispositif terminal d'imprimante est en outre configuré pour :
en réponse à la réception d'une entrée utilisateur sélectionnant l'indicateur visuel, afficher, sur la GUI, une invite à capturer une image d'un code à barres d'erreur imprimé par l'imprimante en association avec le statut d'imprimante ; et
en réponse à la réception de l'image du code à barres d'erreur imprimé par l'imprimante en association avec le statut d'imprimante, modifier la ligne chronologique visuelle pour éliminer l'affichage de l'indicateur visuel.

4. Système de la revendication 1, dans lequel :
l'indicateur visuel comprend une superposition visuelle sur le statut d'imprimante dans la ligne chronologique visuelle.

5. Système de la revendication 4, dans lequel :
la superposition visuelle comprend des marques de hachage.

6. Système de la revendication 1, dans lequel :
la représentation visuelle différente pour chacun parmi l'état d'impression, l'état inactif, et l'état d'erreur inclut une couleur différente.

7. Procédé mis en œuvre par ordinateur, comprenant :
la réception de statuts d'imprimante d'une imprimante au cours d'un laps de temps, chaque statut d'imprimante indiquant un parmi un état d'impression, un état inactif, et un état d'erreur ;
la présentation d'une interface utilisateur graphique, « Graphical User Interface » GUI, sur un écran d'affichage, qui inclut une ligne chronologique visuelle des statuts d'imprimante de l'imprimante au cours du laps de temps, la ligne chronologique visuelle incluant une représentation visuelle différente pour chacun parmi l'état d'impression, l'état inactif, et l'état d'erreur ;
la détermination qu'un statut d'imprimante affiché sur la ligne chronologique visuelle est associé à une entrée utilisateur absent ; et
la modification de la ligne chronologique visuelle pour afficher un indicateur visuel pour le statut d'imprimante indiquant l'entrée utilisateur absent,
**caractérisé par**
la détermination de raisons potentielles pour le statut d'imprimante sur la base de métadonnées du statut d'imprimante ;
en réponse à la réception d'une entrée utilisateur sélectionnant l'indicateur visuel, l'affichage, sur la GUI, des raisons potentielles pour le statut d'imprimante en tant qu'options sélectionnables ; et
en réponse à la réception d'une entrée utilisateur sélectionnant une parmi les raisons potentielles en tant que raison pour le statut d'imprimante, la modification de la ligne chronologique visuelle pour éliminer l'affichage de l'indicateur visuel.

8. Procédé de la revendication 7, comprenant en outre :
en réponse à la réception d'une entrée utilisateur sélectionnant l'indicateur visuel, l'affichage, sur la GUI, d'une invite à entrer un texte utilisateur pour le statut d'imprimante ; et
en réponse à la réception du texte utilisateur pour le statut d'imprimante, la modification de la ligne chronologique visuelle pour éliminer l'affichage de l'indicateur visuel.

9. Procédé de la revendication 7, dans lequel :
l'indicateur visuel comprend une superposition visuelle sur le statut d'imprimante dans la ligne chronologique visuelle.

10. Procédé de la revendication 9, dans lequel :
la superposition visuelle comprend des marques de hachage.

11. Procédé de la revendication 7, dans lequel :
la représentation visuelle différente pour chacun parmi l'état d'impression, l'état inactif, et l'état d'erreur inclut une couleur différente.
